# EUROPÄISCHE PATENTSCHRIFT

(11) **EP 3 348 039 B1**
(45) Veröffentlichungstag und Bekanntmachung des Hinweises auf die Patenterteilung: **27.11.2019**
(21) Anmeldenummer: 16790301.2
(22) Anmeldetag: 24.10.2016
(51) Int. Cl.: H04L 29/06

(54) **VERFAHREN UND VORRICHTUNG ZUM DATENAUSTAUSCH**
METHOD AND DEVICE FOR DATA EXCHANGE
PROCÉDÉ ET DISPOSITIF D'ÉCHANGE DE DONNÉES

(30) Priorität: 13.01.2016 DE 102016200291
(43) Veröffentlichungstag der Anmeldung: 18.07.2018
(73) Patentinhaber: Siemens Aktiengesellschaft, 80333 München (DE)
(72) Erfinder: HUND, Johannes, 81739 München (DE)
(86) Internationale Anmeldenummer: PCT/EP2016/075539
(87) Internationale Veröffentlichungsnummer: WO 2017/121508

(56) Entgegenhaltungen:
- US-A1- 2011 173 324
- Peter Waher: "XEP-xxx: Quality of Service", XMPP , 12. November 2015 (2015-11-12), XP002765636, Gefunden im Internet: URL:http://xmpp.org/extensions/inbox/qos.h tml [gefunden am 2017-01-04]

## Beschreibung

Die Erfindung betrifft ein Verfahren sowie eine Vorrichtung zum Datenaustausch gemäß dem Oberbegriff der unabhängigen Patentansprüche.

Im Stand der Technik sind Kommunikationsprotokolle bekannt, welche einen Datenaustausch in Quasi-Echtzeit ermöglichen. Nach Aufbau einer üblicherweise persistenten Datenverbindung, meist über mehrere Netzelemente hinweg, erfolgt der Datenaustausch mittels sogenannter »Stanzas«. Eine Stanza enthält neben eigentlich auszutauschenden Daten bzw. »Payload« einen Attributbereich, welcher eine Typ-Charakterisierung der Stanza sowie Daten zu Adressierung eines Senders und Empfängers der Stanza enthält. Ein bekanntes Quasi-Echtzeit-Kommunikationsprotokoll »Extensible Messaging and Presence Protocol«, abkürzend XMPP, ist von der der Internet Engineering Task Force, IETF, in den Requests for Comment RFC 6120, RFC 6121 und RFC 6122 spezifiziert.

Im Stand der Technik sind Beschreibungssprachen zur Spezifikation von Datenformaten und der für eine Bearbeitung der Daten benötigten Verfahren bekannt. Eine bekannte Beschreibungssprache ist »Extensible Markup Language«, abgekürzt XML, mit welcher hierarchisch strukturierte Daten in Textform beschrieben werden. Die Beschreibungssprache XML wird für einen plattformunabhängigen Austausch von Daten zwischen Rechnersystemen eingesetzt. Aufgrund der textuellen Natur von XML ist diese sowohl durch Maschinen als auch durch Menschen lesbar.

Wurde XMPP anfänglich vorwiegend für einen Nachrichtensofortversand bzw. »Instant Messaging« zur Quasi-Echtzeit-Kommunikation zweier oder mehrerer Teilnehmer per Textnachrichten eingesetzt wurde, vermehrt sich die Verbreitung von XMPP in nachrichtenorientierten Middleware-Applikationen auf der Basis von XML, insbesondere in Applikationen im Umfeld eines »Internet of Things«.

Während eine Nutzung von XMPP für die Belange von Instant Messaging, insbesondere für Chat-Applikationen, keine besonderen Vorgaben an die Qualität des Nachrichtenaustauschs erfordert, stellen nachrichtenorientierte Middleware-Applikationen Anforderungen an die Qualität des Nachrichtenaustauschs, beispielsweise durch spezifizierte Antwortzeiten, oder einen geforderten Durchsatz von Nachrichten. Derlei Anforderungen an die Qualität des Nachrichtenaustauschs, in der Fachwelt auch als Dienstgüte oder Quality of Service (QoS) bekannt, unterscheiden sich dabei in Abhängigkeit von der Applikationen, welcher der nachrichtenorientierten Middleware-Applikationen übergeordnet ist bzw. sich dieser bedient.

Derzeit bekannte Maßnahmen zur Gewährleistung einer zugesagten Dienstgüte umfassen eine Parametrisierung eines Datenpaketverkehrs mit einer Reservierung, Optimierung und gegebenenfalls Limitierung von Datenpaketraten. Diese Maßnahmen erfolgen allesamt auf Schicht 3 des bekannten OSI-Modells (Open Systems Interconnection Model), also der Vermittlungsschicht bzw. Network Layer, welche die Vermittlung auf Datenpaketebene betrifft.

Maßnahmen zur Gewährleistung einer Dienstgüte auf der Vermittlungsschicht sind indes für nachrichtenorientierte Middleware-Applikationen auf Basis von Quasi-Echtzeit-Kommunikationsprotokollen nicht geeignet, da erstere nur eine Weiterleitung von Datenpaketen auf Schicht 3 des OSI-Modells steuern, während letztere einen übergeordneten Nachrichtenaustausch auf einer Applikationsschicht regeln sollen. Auf der übergeordneten Ebene der Applikationsschicht sind datenpaketorientierte Dienstgüteattribute aus der Vermittlungsschicht nicht mehr zugreifbar und blieben ohnehin, etwa bei einer Vermittlung über mehrere Netzwerksegmentgrenzen hinweg, nicht invariabel, da datenpaketorientierte Attribute während der Weiterleitung von Datenpaketen in einzelnen Netzknoten jederzeit geändert werden können. Maßnahmen zur Gewährleistung einer Dienstgüte bei einem Datenaustausch zwischen einem Sender und Empfänger auf Applikationsschicht sind daher mit bekannten Maßnahmen zur Gewährleistung einer Dienstgüte auf der Vermittlungsschicht nicht zu bewerkstelligen.

Aus der US 2011/173324 A1 ist ein Verfahren zum Austausch unter Anwendung eines Quasi-Echtzeit-Protokolls bekannt, welches gemäß dem Extensible Messaging and Presence Protocol (XMPP) ausgestaltet ist. Bei diesem Verfahren wird ein Routing-Pfad in XMPP aufgebaut, wobei eine Nachricht zu einem Ziel entlang des zuvor einstellbaren Pfades geleitet werden soll. Beim Aufbau des Routing-Pfads in XMPP wird als Dienstgüteattribut ein QoS berücksichtigt.

Im der Publikation Peter Waher: "XEP-xxx: Quality of Service", XMPP, 12. November 2015, XP002765636, abrufbar im Internet: URL: http://xmpp.org/extensions/inbox/qos.html sind verschiedene Möglichkeiten der QoS-Implementierung in dem bekannten Quasi-Echtzeit-Kommunikationsprotokoll XMPP beschrieben.

Der Erfindung liegt die Aufgabe zugrunde, Mittel anzugeben, welche auf Applikationsschicht eine Einstellung einer Dienstgüte für ein Quasi-Echtzeitprotokoll gestatten.

Die Aufgabe wird erfindungsgemäß durch ein Verfahren mit den Merkmalen des Patentanspruchs 1 gelöst.

Beim erfindungsgemäßen Verfahren zum Datenaustausch unter Anwendung eines Quasi-Echtzeitprotokolls ist nach Aufbau einer Datenverbindung über mindestens ein Netzelement ein Datenaustausch über eine Mehrzahl von Stanzas vorgesehen. Eine Stanza beinhaltet neben den eigentlich auszutauschenden Daten, auch Nutzdaten oder »Payload« genannt, einen Attributbereich. Der Attributbereich enthält Attribute für eine Typ-Charakterisierung der Stanza sowie Daten zur Adressierung eines Senders und Empfängers der Stanza.

Erfindungsgemäß ist eine Erweiterung des Attributbereichs um ein oder mehrere Dienstgüteattribute vorgesehen, welche von zumindest einem am Datenaustausch beteiligten Netzelement zur Bestimmung einer Handhabung einer jeweiligen Stanza, insbesondere gegenüber anderen Stanzas, herangezogen wird. Dabei wird das Dienstgüteattribut auf einer Applikationsebene des zumindest einen am Datenaustausch beteiligten Netzelements ausgewertet.

Bei einer Handhabung von am Datenaustausch zwischen dem jeweiligen Empfänger und dem jeweiligen Sender (und eventuell mehrerer weiterleitender Server) beteiligten Netzelementen, wird der Attributbereich der Stanza ausgewertet. Die erfindungsgemäße Vorsehung der Dienstgüteattribute in diesem Bereich hat den Vorteil, dass eine Auswertung der Nutzdaten der Stanza nicht erforderlich ist. Überlegungen, statt dessen eine sogenannte Deep Inspection, also eine Analyse der gesamten XML-Inhalte im Payload einer Stanza vorzunehmen, würden gegenüber der erfindungsgemäßen Vorsehung eines Attributs einen erheblichen Mehraufwand bedeuten.

Die Dienstgüteattribute können in vorteilhafter Weise von den am Datenaustausch beteiligten Netzelementen, also Client, Server, und weiterleitende Server (»Intermediaries«) zur Bestimmung einer Handhabung einer jeweiligen Stanza herangezogen werden, beispielsweise auch zur Bestimmung einer Handhabung einer jeweiligen Stanza gegenüber anderen Stanzas, etwa im Sinne einer Priorisierung.

Eine »Handhabung« der Stanzas kann dabei je nach Einsatzzweck folgende Ausprägungen einnehmen:
- Ein Einordnen der Stanzas in ein Warteschleifenverfahren bzw. Queueing, also beispielsweise in welcher Reihenfolge ausgehende Stanzas zum Empfänger gesendet werden.
- Eine Pufferung bzw. Buffering, also in welcher Reihenfolge eingehende Stanzas verarbeitet werden.
- Eine Weiterleitungsregel bzw. Routing, also wohin und ob Stanzas weitergeleitet werden.

Die Aufgabe wird erfindungsgemäß durch ein Computerprogrammprodukt mit Mitteln zur Durchführung des Verfahrens sowie durch ein Netzelement zur Durchführung des Verfahrens gelöst.

Weitere vorteilhafte Ausgestaltungen der Erfindung sind Gegenstand der abhängigen Ansprüche.

Gemäß einer Ausgestaltung der Erfindung umfasst ein Dienstgüteattribut
- eine Gültigkeitsdauer der Stanza zur Bestimmung einer Übermittlungszeit, nachdem die Stanza irrelevant ist;
- einen Prioritätswert zu Priorisierung der Stanza auf einer Applikationsebene; und/oder;
- ein Zuordnungsdatum zur Zuordnung der Stanza zu einer Applikation oder einer Applikationsgruppe.

Insbesondere die Zuordnung der Stanza zu einer Applikation oder einer Applikationsgruppe erweist sich als vorteilhaft, da im Fall einer Nutzung eines XMPP-Kanals für verschiedene Applikationen verschiedene Dienstgütevorgaben bzw. Constraints z.B. bezüglich Antwortzeiten, Durchsatz usw. vorgegeben werden können, die sehr applikationsspezifisch sind. Auch können Applikationen untereinander verschiedene Wichtigkeiten für das Gesamtsystem aufweisen. Die über die Dienstgüteattribute bewirkten Dienstgüteeinstellungen können bei Bedarf auch an tiefere Applikationsschichten weitergereicht werden. Besonders bei Lastsituationen im Netzwerk können so bessere Dienstgüteergebnisse erzielt werden.

Im Folgenden werden weitere Ausführungsbeispiele und Vorteile der Erfindung anhand der Zeichnung näher erläutert. Dabei zeigen:
- Fig. 1:: eine schematische Darstellung einer Struktur einer Stanza; und
- Fig. 2:: eine schematische Darstellung eines Datenaustauschs über mehrere Netzelemente zwischen einem ersten und einem zweiten Client.

Im Folgenden soll ein Verfahren zum Datenaustausch auf der Applikationsschicht unter Anwendung eines Quasi-Echtzeit-protokolls, insbesondere XMPP, betrachtet werden, bei dem, nach Aufbau einer für einen definierbaren Zeitraum persistenten Datenverbindung - beispielsweise unter Anwendung des paketvermittelnden Transportprotokolls TCP (Transmission Control Protocol) - über mindestens ein Netzelement ein Datenaustausch mittels mehrerer Stanzas erfolgt.

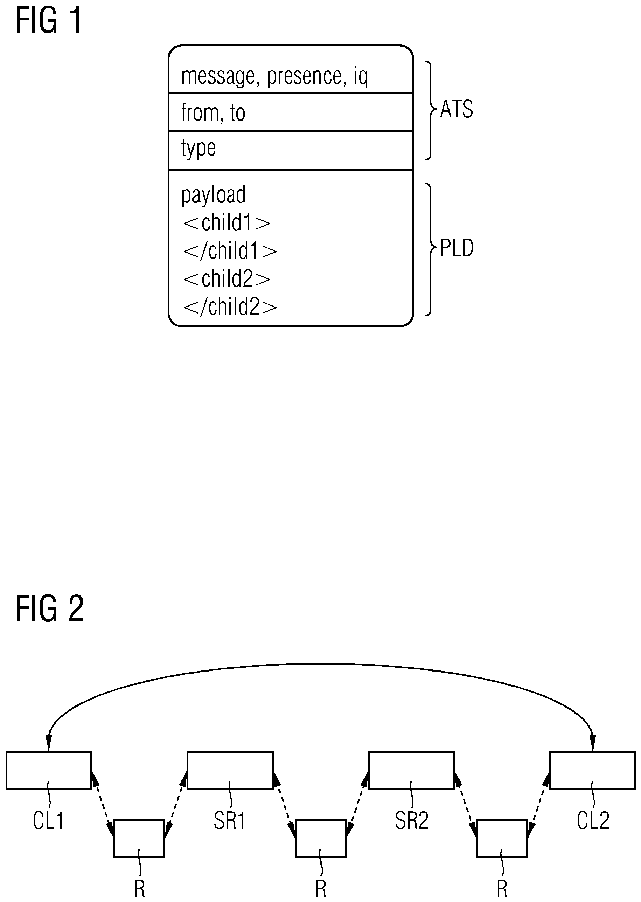

Fig. 1 zeigt eine Stanza bestehend aus einem Attributbereich ATS und einem Nutzdatenbereich PLD.

In der Zeichnung dargestellte Typattribute »message«, »presence«, »iq« definieren einen Typ der Stanza. Eine Stanza des Typs »message« dient einem Austausch von Textnachrichten, eine Stanza des Typs »presence« dient einem Austausch von Anwesenheits- und Verfügbarkeitsinformationen und eine Stanza mit dem Typ »iq« (Info/Query) stellt einen Request-Response-Mechanismus zum Austausch von XML-Strukturen bereit.

In der Zeichnung dargestellte Attribute »from« und »to« adressieren einen Empfänger sowie einen Sender. Die Adressierung selbst erfolgt durch sogenannte JIDs (Jabber Identifier), welcher einer E-Mailadresse ähneln. Ein weiteres - nicht dargestelltes - Attribut id dient zum Zuordnen von Stanza-Paaren.

Ein in der Zeichnung dargestelltes Attribute »type« dient in Erweiterung der oben genannten Typattribute einer genaueren Differenzierung des Stanzatyps.

Fig. 2 zeigt eine schematische Darstellung eines Datenaustauschs über mehrere Netzelemente zwischen einem ersten und einem zweiten Client CL1,CL2. Zwischen den besagten Clients, also Kommunikationspartnern, welche fallweise und vorübergehend als Sender und/oder Empfänger agieren, sind mehrere Netzelemente, hier ein erster Server SR1, ein zweiter Server SR2 sowie eine Mehrzahl von Routers R am Datenaustausch zwischen beiden Clients CL1,CL2 beteiligt. Im Unterschied zu einer paketorientierten Datenübertragung - in der Zeichnung durch gestrichelte Doppelpfeile zwischen den einzelnen Netzelementen dargestellt - auf der Vermittlungsschicht bzw. Network Layer, wird der Datenaustausch auf der Applikationsschicht lediglich über die Clients CL1,CL2 sowie über die dazwischenliegenden Server bzw. »Intermediaries« SR1,SR2 ausgebildet. Nach einem erfolgreichen Aufbau der persistenten Datenverbindung erfolgt der weitere Datenaustausch - in der Zeichnung durch einen bogenförmigen Doppelpfeil zwischen den Clients CL1,CL2 dargestellt - als direkte Ende-zu-Ende-Kommunikation.

Im Folgenden wird ein exemplarischer Aufbau einer Stanza näher betrachtet. In XML-Notation weise diese folgende Struktur auf:

```
<iq to='bar' type='set'>
  <payload ... />
 </iq>
 Die erste Zeile,
 <iq to='bar' type='set'>
 umfasst den Attributbereich an den sich, in der zweiten Zei-
 le, der Nutzdatenbereich PLD,
  <payload ... />
 anschließt. Die letzte Zeile
 </iq>
 schließt die Stanza ab.
```

Das Typ-Attribut »iq« gibt einen Charakter der Stanza vor, dahingehend, dass mit ihr ein Request-Response-Mechanismus zum Austausch von XML-Strukturen initiiert werden soll. Dieser Typ der Stanza wird durch ein weiteres »type«-Attribut dahingehend spezifiziert, dass mit dieser Stanza ein Wert auf dem Zielsystem des Empfängers eingestellt werden soll: type='set'.

Die Stanza ist an einen exemplarischen Client als Empfänger gerichtet, der hier vereinfacht mit »bar« bezeichnet wird. Diese lediglich zu Anschauungszwecken verkürzte Adressierung des Empfängers würde in einer realen Implementierung durch eine komplette JID (Jabber Identifier) erfolgen, etwa der Form: »bar@example.com/home«.

Eine diese Anfrage beantwortende Stanza seitens des Clients »bar« weist dann folgende beispielhafte Struktur auf:

```
 <iq from='bar' to= 'foo' type='result'>
  <payload ... />
 </iq>
```

Der diesmal explizit bezeichnete sendende Client »bar« sendet mit dieser Stanza an den diesmal als Empfänger wirkenden Initiator »foo« ein Ergebnis »result« der zuvor gesandten Einstellungsanforderung »set« zurück.

Erfindungsgemäß wird das oben gezeigte Stanzapaar im Attributbereich ATS nun mit mindestens einem Dienstgüteattribut versehen, welche dem Server SRV1,SRV2 oder auch den Clients CL1,CL2 unter anderem eine Klassifikation ermöglichen, welche Stanza welche Voraussetzungen bzgl. Dienstgüte hat:

```
 <iq to='bar' type='set'
 qos:prio='high' qos:ttl='20'>
  <payload ... />
 </iq>
```

In einer Ausgestaltung der Erfindung sind zwei Dienstgüte- bzw. QoS-Attribute (Quality of Service), nämlich »prio« und »ttl« vorgesehen. Der Wert des Dienstgüteattributs »prio« gibt den am Datenaustausch beteiligten Netzelementen und Clients eine Prioritätshöhe für die Weiterleitung und Bearbeitung der jeweiligen Stanza vor, oder im Allgemeinen, ein Maß zur Handhabung der Stanza, insbesondere gegenüber anderen Stanzas mit geringerer Priorität. Die Priorität der Stanza ist im obigen Beispiel mit der Anweisung

```
 qos:prio='high'
 auf »hoch« gesetzt.
```

Der Wert des Dienstgüteattributs »ttl« (Time to Live bzw. Überlebenszeit) gibt den am Datenaustausch beteiligten Netzelementen und Clients eine Anforderungen an die Übermittlungszeit, nachdem die Stanza irrelevant ist, oder im Allgemeinen, ein Zeitmaß zur Handhabung der Stanza. Die Überlebenszeit der Stanza ist im obigen Beispiel mit der Anweisung

```
qos:ttl='20'
 auf 20 Sekunden gesetzt.
```

Eine diese Anfrage beantwortende Stanza seitens des Clients »bar« weist dann folgende beispielhafte Struktur auf:

```
 <iq from='bar' to= 'foo' type='result'
 qos:prio='high' qos:ttl='18'>
  <payload ... />
 </iq>
```

Die Priorität der beantwortenden Stanza im obigen Beispiel ist ebenfalls auf »hoch« gesetzt, die Überlebenszeit ist auf 18 Sekunden gesetzt.

Das erfindungsgemäße Verfahren zum Datenaustausch unter Anwendung eines Quasi-Echtzeitprotokolls, insbesondere XMPP, sieht eine Erweiterung des Attributbereichs um ein oder mehrere Dienstgüteattribute vor, welche von am Datenaustausch beteiligten Netzelementen zur Bestimmung einer Handhabung einer jeweiligen Nachricht bzw. Stanza nach Vorgaben des Dienstgüteattributs vorsieht. Damit lässt sich eine Dienstgüte bzw. Quality of Service auf einer Applikationsschicht implementieren.

Die Implementierung einer Dienstgüte auf Applikationsschicht gewährleistet bei einer Datenübertragung einer Mehrzahl unterschiedlicher Applikationen zugeordneten Stanzas eine Annotation jeder einzelnen Stanza bezüglich ihrer Eigenschaften und Erwartungshaltungen. Damit kann seitens der Endpunkte bzw. Clients eine detailliertere Steuerung des Datenaustauschs bewirkt werden. Die über die Dienstgüteattribute bewirkten Dienstgüteeinstellungen können bei Bedarf auch an tiefere Applikationsschichten weitergereicht werden. Besonders bei Lastsituationen im Netzwerk können so bessere Dienstgüteergebnisse erzielt werden.

## Patentansprüche

1. Verfahren zum Datenaustausch unter Anwendung eines Quasi-Echtzeitprotokolls, bei dem nach Aufbau einer Datenverbindung über mindestens ein Netzelement (R, SR1, SR2) der Datenaustausch mittels mindestens einer Stanza erfolgt,
wobei eine Stanza neben auszutauschenden Daten (PLD) einen Attributbereich (ATS) beinhaltet, in dem eine Typ-Charakterisierung der Stanza sowie Daten zur Adressierung eines Senders und Empfängers der Stanza enthalten sind,
wobei im Attributbereich (ATS) mindestens ein Dienstgüteattribut vorgesehen ist,
**dadurch gekennzeichnet,**
**dass** das mindestens eine Dienstgüteattribut von zumindest einem am Datenaustausch beteiligten Netzelement (R, SR1, SR2) zur Bestimmung einer Handhabung einer jeweiligen Stanza gegenüber anderen Stanzas herangezogen wird; und
**dass** das Dienstgüteattribut auf einer Applikationsebene des zumindest einen am Datenaustausch beteiligten Netzelements (R, SR1, SR2) ausgewertet wird.

2. Verfahren gemäß Patentanspruch 1,
**dadurch gekennzeichnet,**
**dass** das Quasi-Echtzeitprotokoll gemäß dem Extensible Messaging and Presence Protocol ausgestaltet ist.

3. Verfahren gemäß einem der vorgenannten Patentansprüche,
**dadurch gekennzeichnet,**
**dass** das Dienstgüteattribut
- eine Gültigkeitsdauer der Stanza zur Bestimmung einer Übermittlungszeit, nachdem die Stanza irrelevant ist;
- einen Prioritätswert zu Priorisierung der Stanza auf einer Applikationsebene; und/oder;
- ein Zuordnungsdatum zur Zuordnung der Stanza zu einer Applikation oder einer Applikationsgruppe;
umfasst.

4. Computerprogrammprodukt mit Mitteln zur Durchführung des Verfahrens nach einem der vorhergehenden Ansprüche, wenn das Computerprogrammprodukt an einem Netzelement (R, SR1, SR2) zur Ausführung gebracht wird.

5. Netzelement (R, SR1, SR2) zur Durchführung eines Datenaustauschs unter Anwendung eines Quasi-Echtzeitprotokolls,
mit einem Datenverbindungsmodul zum Aufbau einer Datenverbindung;
mit einem Austauschmodul zum Austausch von Stanzas über die Datenverbindung und zur Bearbeitung einer in einem Attributbereich der Stanza beinhalteten Typ-Charakterisierung der Stanza sowie von Daten zu Adressierung eines Senders und Empfängers der Stanza, wobei das Austauschmodul eingerichtet ist zur Bearbeitung mindestens eines Dienstgüteattributs im Attributbereich,
**dadurch gekennzeichnet,**
**dass** ein Handhabungsmodul eingerichtet ist zur Handhabung einer jeweiligen Stanza gegenüber anderen Stanzas unter Heranziehung des Dienstgüteattributs, und
**dass** das Austauschmodul eingerichtet ist zur Auswertung des Dienstgüteattributs auf einer Applikationsebene des Netzelements (R, SR1, SR2).

## Claims

1. Method for interchanging data using a quasi-real-time protocol, in which, after a data connection has been set up via at least one network element (R, SR1, SR2), the data are interchanged by means of at least one stanza,
wherein, in addition to data (PLD) to be interchanged, a stanza contains an attribute region (ATS) containing a type characterization of the stanza and data for addressing a transmitter and a receiver of the stanza,
wherein
at least one quality of service attribute is provided in the attribute region (ATS)
**characterized**
**in that** the at least one quality of service attribute is used by at least one network element (R, SR1, SR2) involved in interchanging the data to determine handling of a respective stanza with respect to other stanzas; and
**in that** the quality of service attribute is evaluated on an application layer of the at least one network element (R, SR1, SR2) involved in interchanging the data.

2. Method according to Patent Claim 1,
**characterized**
**in that** the quasi-real-time protocol is configured according to the Extensible Messaging and Presence Protocol.

3. Method according to either of the preceding patent claims,
**characterized**
**in that** the quality of service attribute comprises
- a validity period of the stanza for determining a transmission time, after the stanza is irrelevant;
- a priority value for prioritizing the stanza on an application layer; and/or
- an assignment data item for assigning the stanza to an application or a group of applications.

4. Computer program product having means for carrying out the method according to one of the preceding claims when the computer program product is executed on a network element (R, SR1, SR2).

5. Network element (R, SR1, SR2) for interchanging data using a quasi-real-time protocol,
having a data connection module for setting up a data connection;
having an interchanging module for interchanging stanzas via the data connection and for processing a type characterization of the stanza contained in an attribute region of the stanza and data for addressing a transmitter and a receiver of the stanza, wherein the interchanging module is set up to process at least one quality of service attribute in the attribute region, **characterized**
**in that** a handling module is set up to handle a respective stanza with respect to other stanzas using the quality of service attribute, and
**in that** the interchanging module is set up to evaluate the quality of service attribute on an application layer of the network element (R, SR1, SR2).

## Revendications

1. Procédé d'échange de données par l'application d'un protocole en quasi temps réel, dans lequel, après établissement d'une liaison de données par au moins un élément de réseau (R, SR1, SR2), l'échange de données a lieu au moyen d'au moins une stance,
dans lequel une stance contient, outre des données à échanger (PLD), un domaine d'attributs (ATS) dans lequel sont contenues une caractérisation de type de la stance ainsi que des données pour l'adressage d'un expéditeur et d'un destinataire de la stance, dans lequel au moins un attribut de qualité de service est prévu dans le domaine d'attributs (ATS),
**caractérisé en ce que**
l'au moins un attribut de qualité de service est utilisé par au moins un élément de réseau (R, SR1, SR2) impliqué dans l'échange de données pour déterminer une manipulation d'une stance respective par rapport à d'autres stances ; et
que l'attribut de qualité de service est évalué sur un niveau d'application de l'au moins un élément de réseau (R, SR1, SR2) impliqué dans l'échange de données.

2. Procédé selon la revendication 1,
**caractérisé en ce que**
le protocole en quasi temps réel est formé selon le protocole extensible messaging and presence protocol.

3. Procédé selon l'une des revendications précédentes,
**caractérisé en ce que**
l'attribut de qualité de service comprend
- une durée de validité de la stance pour déterminer un temps de transfert dès lors que la stance n'est plus pertinente ;
- une valeur de priorité pour prioritiser la stance sur un niveau d'application ; et/ou ;
- une date d'attribution pour attribuer la stance à une application ou à un groupe d'applications.

4. Produit de programme informatique comprenant des moyens pour exécuter le procédé selon l'une des revendications précédentes lorsque le produit de programme informatique est mis sur un élément de réseau (R, SR1, SR2) pour exécution.

5. Élément de réseau (R, SR1, SR2) pour exécuter un échange de données en appliquant un protocole en quasi temps réel, avec un module de liaison de données pour établir une liaison de données ;
avec un module d'échange pour échanger des stances par le biais de la liaison de données et pour traiter une caractérisation de type de la stance, contenue dans un domaine d'attributs de la stance ainsi que des données pour l'adressage d'un expéditeur et d'un destinataire de la stance, dans lequel le module d'échange est conçu pour traiter au moins un attribut de qualité de service dans le domaine d'attributs,
**caractérisé en ce**
**qu'**un module de manipulation est conçu pour manipuler une stance respective par rapport à d'autres stances en utilisant l'attribut de qualité de service, et
**que** le module d'échange est conçu pour évaluer l'attribut de qualité de service sur un niveau d'application de l'élément de réseau (R, SR1, SR2).
